# EUROPÄISCHE PATENTSCHRIFT

(11) **EP 1 798 180 B1**
(45) Veröffentlichungstag und Bekanntmachung des Hinweises auf die Patenterteilung: **29.12.2010**
(21) Anmeldenummer: 06021961.5
(22) Anmeldetag: 19.10.2006
(51) Int. Cl.: B65H 29/60, B65H 29/62, B65H 43/00, G01G 11/00, B65G 47/34, B65H 31/24

(54) **Sortiervorrichtung**
Sorting apparatus
Appareil de triage

(30) Priorität: 16.12.2005 DE 102005060308
(43) Veröffentlichungstag der Anmeldung: 20.06.2007
(60) Teilanmeldung: 10010341.5
(73) Patentinhaber: Mettler-Toledo Garvens GmbH, 31180 Giesen (DE)
(72) Erfinder: Georgitsis, Nikolaos, 21033 Hamburg (DE); Kliefoth, Rüdiger, 30952 Ronnenberg (DE)
(74) Vertreter: Leinweber & Zimmermann

(56) Entgegenhaltungen:
- DE-A1- 4 129 612
- JP-A- 9 077 324
- JP-A- 2006 273 480
- US-A- 3 189 342
- US-A- 3 631 979

## Beschreibung

Die Erfindung betrifft einen Behälter für ein Verfahren zum Sortieren von Produkten, bei dem die Produkte längs eines Förderweges in einer Förderrichtung transportiert werden, während des Transports automatisch nach mindestens zwei vorgegebenen Sortierkriterien geprüft und bei Erfüllung eines der Kriterien durch eine Ablenkkraft automatisch quer zur Förderrichtung aus dem Förderweg zu einem Aufnahmebereich hin abgelenkt werden.

Derartige Sortierverfahren sind weithin bekannt. Sie dienen zum Aussortieren von Produkten, die nicht den für die Produkte gewünschten Eigenschaften entsprechen. Dabei ist die Bezeichnung "Produkt" hier als ein Sammelbegriff für Erzeugnisse aller Art zu verstehen, die insbesondere bereits verpackt sein können. Besonders in der pharmazeutischen Industrie und der Lebensmittelindustrie werden diese Sortierverfahren bevorzugt eingesetzt, damit nach dem Sortierverfahren nur noch Produkte weitertransportiert werden, welche die vom Hersteller gewünschten Eigenschaften aufweisen. Beispiele für solche gewünschten Eigenschaften sind etwa ein bestimmtes Packungsgewicht (aus dem geschlossen werden kann, daß sich z. B. genau die richtige Anzahl von z.B. Tabletten in einer Medikamentenschachtel befinden) oder auch, daß die Verpackungen ordnungsgemäß geschlossen sind, also nicht etwa eine offene Lasche aufweisen. In diesen Fällen bildet beispielsweise das Wiegetransportband bekannter Kontrollwaagen, von denen das Packungsgewicht während des Durchlaufs durch das Wiegetransportband erfaßt wird, einen Abschnitt des Förderweges.

Diejenigen Produkte, welche die erwünschten Eigenschaften nicht aufweisen, werden aus dem Förderweg abgelenkt und gelangen zu einer Sammelzone, wo sie in Behältern gesammelt werden können. Um festzustellen, welche Produkte aussortiert bzw. abgelenkt werden müssen, werden entsprechend den gewünschten Eigenschaften (negative) Sortierkriterien vorgegeben, also für die obigen Beispiele etwa ein fehlerhaftes Gewicht zu groß oder zu klein) sowie eine offene Verpackungslasche, und die Produkte werden während des Transports längs des Förderweges nach diesen Sortierkriterien geprüft. Stellt sich dabei heraus, daß ein Produkt mindestens eines der Kriterien nicht erfüllt, wird es im Anschluss an diese Feststellung aus dem Förderweg abgelenkt und aussortiert.

Bei bekannten Sortierverfahren der eingangs genannten Art, bei denen (mindestens) nach zwei vorgegebenen Sortierkriterien geprüft wird, wird zunächst nach einem ersten Sortierkriterium geprüft und das jeweilige Produkt im Anschluss an diese erste Prüfung von einer geeigneten Vorrichtung aus dem Förderweg abgelenkt, wenn es das erste Sortierkriterium erfüllt hat. Nach diesem ersten Sortierschritt werden also nur noch Produkte weitertransportiert, die bezüglich der ersten Eigenschaft den gewünschten Anforderungen entsprechen. Anschließend, also in Förderrichtung stromabwärts, erfolgt dann die Prüfung nach dem zweiten vorgegebenen Sortierkriterium, wobei analog jedes Produkt, welches das zweite Kriterium erfüllt, von einer weiteren geeigneten Vorrichtung aus dem Förderweg abgelenkt und aussortiert wird. Im Anschluss an diesen zweiten Sortierschritt besitzen folglich alle weitertransportierten Produkte bezüglich beider Sortierkriterien die gewünschten Eigenschaften. Das gesamte Verfahren läuft dabei vollautomatisiert ab, d.h. die Prüfung nach den vorgegebenen Sortierkriterien als auch die Ablenkung der auszusortierenden Produkte erfolgt automatisch, und wird üblicherweise von einer elektronischen Steuerung gesteuert.

Bei derartigen bekannten Sortierverfahren ist allerdings die Durchführung der beiden aufeinanderfolgenden Sortierschritte mit verschiedenen Nachteilen verbunden. Insbesondere hat der zum Sortieren benötigte Förderweg eine verhältnismäßig große Länge. Diese stellt insofern ein Problem dar, als dass zum Aufstellen entsprechender Sortiervorrichtungen, bei denen der Förderweg üblicherweise durch ein oder mehrere Förderbänder realisiert ist, oftmals nicht ausreichend Platz vorhanden ist. Ferner ist auch die Art und Ausbildung des Aufnahmebereichs hinsichtlich ihres Aufbaus und/oder ihres Platzbedarfs aufwendig. DE 41 29 612 A1, JP 2006 273480 A, JP 09077324 A offenbaren Sortiervorrichtungen, US 3189342 auch zusammen mit zwei Stapelstellen.

Aufgrund dieses im Stand der Technik erkannten Problems ist es Aufgabe der Erfindung, einen Behälter für ein Sortierverfahren der eingangs genannten Art bereitzustellen, sodaß dieser weniger aufwendig ist.

Diese Aufgabe wird durch die Erfindung gemäß Patentanspruch 1 gelöst. Es ist geeignet für Sortierverfahren bei denen die Ablenkkraft unabhängig davon, aufgrund welches erfüllten Kriteriums das jeweilige Produkt abzulenken ist, von einem gemeinsamen Zentrum ausgeht. Im Folgenden werden Merkmale eines solchen Verfahrens beschrieben.

Hier und im folgenden ist, der Ausdruck "gemeinsam", so zu verstehen, daß die als gemeinsam bezeichnete Maßnahme gleichermaßen für alle Sortierkriterien zutrifft. Der Ausdruck "gemeinsam" bezeichnet also stets die Gemeinsamkeit hinsichtlich aller Sortierkriterien. Demnach ist "gemeinsames Zentrum" dahingehend zu verstehen, daß von diesem gemeinsamen Zentrum die Ablenkkraft für alle abzulenkenden Produkte ausgeht, also diejenigen, die das eine Sortierkriterium, diejenigen, die das andere Sortierkriterium und (sofern möglich) diejenigen Produkte, die beide Sortierkriterien erfüllen. Dies steht im Gegensatz zu dem Stand der Technik bei dem Produkte, die unterschiedliche Sortierkriterien erfüllen, durch von verschiedenen Zentren ausgehende Ablenkkräfte abgelenkt werden.

Indem die Ablenkkraft von einem derartigen gemeinsamen Zentrum ausgeht, kann insbesondere die Länge des zum Sortieren benötigten Förderweges verkürzt werden, denn es muss nicht wie bisher für jedes Sortierkriterium ein gesondertes Kraftausgangszentrum vorgesehen werden.

Ein weiteres Merkmal eines derartigen Sortierverfahrens besteht darin, dass die Ablenkung der abzulenkenden Produkte in Förderrichtung gesehen hinter der Prüfung nach den zwei Sortierkriterien erfolgt. Auf diese Weise gibt es keinen Ablenkvorgang vor dem Prüfen nach einem der Sortierkriterien, der eine entsprechende Prüfung nach dem anderen Sortierkriterium negativ beeinflussen könnte. Beinhaltet z. B. die Prüfung eine Gewichtsmessung, kann ein vor der Gewichtsmessung befindliches Ablenkzentrum eine Störung des Wägeprozesses bedingen.

Eine Gestaltung des Verfahrens besteht darin, daß die Ablenkung unabhängig davon, aufgrund welches erfüllten Kriteriums das jeweilige Produkt abzulenken ist, von einer gemeinsamen Ablenkstelle des Förderweges aus erfolgt. Dies ermöglicht eine optimal kurze Länge des für die Aussortierung benutzten Abschnittes des Förderweges.

Bei einer Verfahrensgestaltung erfolgt die Ablenkung von der Ablenkstelle aus längs eines gemeinsamen Querweges. So gibt es keine Aufspaltung der Ablenkbahnen gemäß den Sortierkriterien, die der erwünschten Verkürzung des Förderweges entgegenwirken könnte.

In einer Verfahrensgestaltung werden die abgelenkten Produkte in Abhängigkeit von dem von dem jeweilig abgelenkten Produkt erfüllten Kriterium von dem Querweg automatisch in voneinander getrennte Teilbereiche des Aufnahmebereichs hinein abgezweigt. So erfolgt eine Trennung der Produkte nach Sortierkriterien im Aufnahmebereich selbst.

Nach einer Verfahrensgestaltung erfolgen die Abzweigungen in bezug auf eine Querrichtung des Querweges hintereinander. Erstreckt sich etwa der Aufnahmebereich längs des Förderweges, wird so eine zufriedenstellend kurze Ausdehnung des Aufnahmebereichs längs des Förderwegs erreicht.

Es kann allerdings auch vorgesehen werden, daß die Abzweigungen in bezug auf eine Querrichtung des Querweges nach links und nach rechts erfolgen.

Bei einer weiteren Ausführungsform des Verfahrens werden die abgelenkten Produkte durch eine von der Schwerkraft bewirkte Bewegung in den Aufnahmebereich aufgenommen. Dies ermöglicht eine zufriedenstellende Aufnahme der abgelenkten Produkte in dem Aufnahmebereich, ohne daß dazu noch weitere von dem Verfahren bereitzustellende Kräfte nötig wären.

Bei einer besonders Ausführungsform des Verfahrens wird das Gewicht der Produkte während ihres Transports längs des Förderweges gemessen, und eines der Sortierkriterien besteht darin, ob der gemessene Gewichtswert von einem vorgegebenen Sollgewichtswert abweicht. So können etwa alle Produkte aussortiert werden, die nicht das gewünschte Gewicht besitzen. Insbesondere kann eine für die Abweichung relevante Toleranzgrenze festgelegt werden, wobei das Sortierkriterium erst dann erfüllt ist, wenn der gemessene Gewichtswert über die Toleranzbreite hinaus von dem vorgegebenen Sollgewichtswert abweicht.

Eine Verfahrensgestaltung sieht vor, daß dann ein erstes Sortierkriterium darin besteht, ob der gemessene Gewichtswert über dem Sollgewichtswert liegt, und ein zweites Sortierkriterium darin, ob er unter dem Sollgewichtswert liegt.

In einer Verfahrensgestaltung wird eine Formeigenschaft der Produkte während ihres Transports längs des Förderweges optisch gemessen, und eines der Sortierkriterien besteht darin, ob die gemessene Formeigenschaft von einer vorgegebenen Formeigenschaft abweicht. So können vorteilhaft Produkte aussortiert werden, deren Form nicht der gewünschten Form entspricht. Insbesondere können auch Produkte mit geöffneten oder beschädigten Produktverpackungen aussortiert werden.

Das Sortierverfahren beinhaltet auch ein Steuerverfahren, welches das automatische Prüfen der Produkte nach den Sortierkriterien, das automatische Ablenken der abzulenkenden Produkte sowie ggf. das automatische Abzweigen der Produkte in die getrennten Teilbereiche verfahrensgerecht steuert.

Eine für die Durchführung eines solchen Verfahrens geeignete Vorrichtung ist also eine Vorrichtung zum Sortieren von Produkten mit einer Fördereinrichtung zum Transportieren der zu sortierenden Produkte längs eines Förderweges in einer Förderrichtung, einer Prüfeinrichtung zum Prüfen der Produkte nach mindestens zwei Sortierkriterien und einer Ablenkeinrichtung, durch die auf die Produkte bei Erfüllung eines der Kriterien eine die Produkte quer zur Förderrichtung aus dem Förderweg zu einem Aufnahmebereich hin ablenkende Ablenkkraft ausübbar ist, wobei die Ablenkeinrichtung ein gemeinsames Zentrum aufweist, von dem die Ablenkkraft unabhängig davon, aufgrund welches erfüllten Kriteriums das jeweilige Produkt abzulenken ist, ausgeht.

In einer Ausgestaltung dieser Sortiervorrichtung weist die Ablenkeinrichtung genaue einen Ablenker auf, der die Ablenkkraft bewirkt. Der Ablenker selbst kann etwa durch einen Ausschieber (Pusher) oder eine Blasdüse realisiert sein. So kann gegenüber dem Stand der Technik mindestens ein Ablenker eingespart werden.

Allgemein wird der Förderweg üblicherweise durch ein oder mehrere Transportbänder realisiert, die durch ein Gestell erhöht die Produkte auf einer für den Bediener angenehmen Höhe transportieren. Die Prüfeinrichtung mit etwa Wägeeinrichtung und optischer Meßeinrichtung gruppiert sich um das/die Transportband/Transportbänder.

In einer Ausführungsform dieser Sortiervorrichtung ist die optische Meßeinrichtung dabei in Förderrichtung vor der Wägeeinrichtung angeordnet. Dies bewirkt eine effektive Ausnutzung der für das Prüfen nach den Sortierkriterien benötigten Länge des Förderweges, da evtl. vorhandene Schwingungen der transportierten Produkte, die einen genauen Wägeprozeß stören können, noch etwas abklingen können.

In einer Ausgestaltung der Sortiervorrichtung weist der Förderweg einen von einem Wägetransportband gebildeten Bandabschnitt, dem ein Zuführbandabschnitt vorgeschaltet und ein Abführbandabschnitt nachgeschaltet ist, auf. Die Gewichtsmessung der transportierten Produkte erfolgt dann, während sie sich auf dem Wägetransportbandabschnitt befinden, und die Ablenkung der abzulenkenden Produkte erfolgt von einer Ablenkstelle des Abführbandabschnitts aus. Dazu kann an einer Seite des Abführbandabschnitts etwa ein Ausschieber oder eine Blasdüse als Ablenker vorgesehen sein. Der Aufnahmebereich befindet sich dann auf der gegenüberliegenden Seite des Abführbandabschnittes. Eine optische Meßeinrichtung kann am Zuführbandabschnitt vorgesehen sein.

Der Aufnahmebereich weist üblicherweise einen Behälter auf, in den die quer zur Förderrichtung aussortierten Produkte unter Mitwirkung der Schwerkraft aufgenommen werden. Ist etwa eine Öffnung des Behälters höhenmäßig an die aufgestellte Höhe des Transportbands angepaßt, können die aussortierten Produkte einfach in den Behälter hineinfallen.

Die Erfindung betrifft einen solchen Behälter zur Aufnahme eines von einer Sortiervorrichtung aus einer Anzahl die Sortiervorrichtung durchlaufender Produkte aufgrund der Erfüllung eines von mindestens zwei Sortierkriterien aussortierten Produkts. Dabei weist der erfindungsgemäße Behälter eine erste Kammer zur Aufnahme des aussortierten Produkts bei einem erfüllten ersten Sortierkriterium und eine von der ersten Kammer getrennte zweite Kammer zur Aufnahme des aussortierten Produkts bei einem erfüllten zweiten Sortierkriterium sowie eine in Abhängigkeit von den Sortierkriterien gesteuerte Weiche auf, die dem aussortierten Produkt in einer ersten Betriebsstellung den Zugang zu der ersten Kammer ermöglicht und den Zugang zu der zweiten Kammer sperrt, und in einer zweiten Betriebsstellung den Zugang zu der zweiten Kammer ermöglicht und den Zugang zu der ersten Kammer sperrt.

Die Produkte können dann innerhalb des erfindungsgemäßen Behälters nach unterschiedlichen Sortierkriterien, weswegen sie aussortiert wurden, getrennt werden.

Eine baulich besonders einfache Ausführungsform des erfindungsgemäßen Behälters besteht darin, daß die Weiche um eine im wesentlichen parallel zur Richtung der Schwerkkraft verlaufende Achse schwenkbar ist, und die beiden Betriebsstellungen einer Links-/Rechtsabzweigung der aussortierten Produkte bezüglich einer durch die Schwenkachse sowie eine quer zur Schwenkachse verlaufende Richtung definierten Ebene entsprechen. Dabei sollte ein derart gestalteter Behälter so aufgestellt werden, daß die quer zur Schwenkachse verlaufende Richtung mit der Richtung übereinstimmt, aus der die aussortierten Produkte zu dem Behälter gelangen.

Dagegen sieht eine weitere vorteilhafte Ausführungsform des erfindungsgemäßen Behälters vor, daß die Weiche um eine quer zur Richtung der Schwerkraft verlaufende Achse schwenkbar ist, und die beiden Betriebsstellungen einer Hintereinander-Abzweigung der aussortierten Produkte bezüglich einer durch die Schwenkachse sowie eine quer zur Schwenkachse verlaufende Richtung definierten Ebene entsprechen. Wird ein derartiger Behälter so aufgestellt, daß die Schwenkachse quer zur Richtung steht, aus der die abgelenkten Produkte den Behälter erreichen, kann erreicht werden, daß der Behälter längs einer Förderrichtung eines Förderweges einer entsprechenden Sortiervorrichtung eine zufriedenstellend kleine Ausdehnung besitzt.

Bei einer vorteilhaften Ausgestaltung des erfindungsgemäßen Behälters ist die Weiche winkelprofilartig ausgebildet, wobei insbesondere die Schwenkachse der Weiche entlang einer durch das Winkelprofil definierten Kante der Weiche verläuft. So kann ein funktioneller Stellmechanismus der Weiche gut mit von dem Behälter vorgegebenen geometrischen Anforderungen an die Weiche vereinbart werden.

Zweckmäßig ist vorgesehen, daß der Behälter einen Antrieb aufweist, der die Weiche zur Einnahme einer gewünschten Betriebsstellung bewegen kann. Insbesondere weist der Antrieb in einer vorteilhaften Ausgestaltung des Behälters eine pneumatisch bewegbare Kolben-Zylinder-Anordnung auf, die einerseits an einem Gehäuse des Behälters befestigt ist und andererseits an die Weiche, insbesondere über einen Hebelarm an eine sich in Richtung der Schwenkachse erstreckende Welle der Weiche gekoppelt ist. So kann das Umstellen der Weiche mit einer zufriedenstellend geringen vom Antrieb aufzubringenden Hebelkraft erreicht werden. Insbesondere ist vorgesehen, daß der Hebelarm und eine Klappe der Weiche miteinander einen Winkel von zwischen 110° und 160° einnehmen. So wird neben einer zufriedenstellenden Hebelwirkung zum Verstellen der Weiche auch eine zufriedenstellende Anordnung der dazu nötigen Komponenten erreicht.

In einer weiteren vorteilhaften Ausführungsform des Behälters weist der Antrieb einen sich unter Druck zusammenziehenden Zugaktuator auf. Bei diesem Zugaktuator handelt es sich um einen sogenannten Kunstmuskel, der derart gebaut ist, daß er sich unter beispielsweise pneumatischer Druckbeaufschlagung verkürzt und somit eine entlang der Längsrichtung des Muskels verlaufende lineare Zugkraft hervorruft. Neben einigen weiter unten diskutierten technischen Vorteilen kann ein solcher Kunstmuskel insbesondere aufgrund seiner hohen Anfangskraft und geringen Masse hohe Anfangsbeschleunigungen erzielen, und ist daher besonders geeignet, hohe Taktfrequenzen für ein schnelles Umschalten der Weiche zu erreichen.

In einer besonders zweckmäßigen Ausführungsform des Behälters ist der Hebelarm zweiarmig ausgeführt, und ein erster Zugaktuator ist zwischen einen Arm des Hebelarms und einem behälterseitigen Fixpunkt eingespannt, während ein zweiter Zugaktuator zwischen den anderen Arm des Hebelarms und einen behälterseitigen Fixpunkt eingespannt ist. Auf diese Weise bewirkt eine pneumatische Druckbeaufschlagung des ersten Zugaktuators ein Drehmoment bezüglich der Schwenkachse in eine erste Richtung, und eine Druckbeaufschlagung des zweiten Zugaktuators ein Drehmoment in eine der ersten Richtung entgegengesetzte zweite Richtung. Grundsätzlich verhält sich ein Zugaktuator bzw. Kunstmuskel, der nach Druckbeaufschlagung nicht entlastet worden ist, wie eine Feder, setzt also der Druckbeaufschlagung des anderen Zugaktuators eine Federkraft entgegen. Allerdings erfolgt die Druckluftansteuerung der beiden Zugaktuatoren vorteilhaft derart, daß bei Druckbeaufschlagung des einen Zugaktuators der andere druckentlastet wird, so daß beide Aktuatoren zuverlässig im Gegentakt arbeiten. Da eine Federwirkung eines Kunstmuskels auch in seinem entspannten Zustand vorhanden ist, ist der zweiarmige Hebelarm und damit die Klappe der Weiche sozusagen in eine Luftfeder eingespannt. Erschütterungen, welche durch anprallende Produkte auf die Klappe einwirken können, werden so von den Kunstmuskeln abgefangen.

Vorteilhaft kann der Hebelarm mehrere Befestigungsbereiche für die Ankopplung an den Antrieb aufweisen. Auf diese Weise kann lediglich durch eine Befestigung des Antriebs an einem anderen Befestigungsbereich eine unterschiedliche effektive Klappenöffnungshöhe erreicht werden. Dies ist zum Sortieren von Produkten unterschiedlicher Größe besonders zweckmäßig einzusetzen, indem die Klappe bei entsprechend kleinen zu sortierenden Produkten nicht mehr als nötig ausgehoben werden muß. Selbstverständlich spielen bei der Berechnung der effektiven Klappenhöhe auch die Hebelarmgeometrie sowie der Maximalhub der Kolben-Zylinder-Anordnung bzw. die maximale Kontraktion eines Kunstmuskels eine Rolle. In diesem Zusammenhang ist es auch zweckmäßig, wenn sich die Kolben-Zylinder-Anordnung bzw. der Zugaktuator an seiner bzw. seinem behälterseitigen Befestigungspunkt um eine Achse drehbar gelagert ist. Insbesondere ist es sinnvoll, wenn diese Achse parallel zur Schwenkachse der Weiche verläuft.

Für eine aben erläuterte Sortiervorrichtung einschließlich des erfindungsgemäßen Behälters ist auch eine Steuereinrichtung vorgesehen, welche von der Prüfeinrichtung mit Informationen erhält, ob und warum ein Produkt abzulenken ist, und entsprechende Steuerbefehle an die Ablenkeinrichtung der Sortiervorrichtung wie auch an die Weiche des Behälters richtet. Dabei ist zweckmäßig vorgesehen daß die automatische Weichenstellung und der automatische Ablenkvorgang synchronisiert erfolgen. So wird zuverlässig sichergestellt, daß ein abgelenktes Produkt auch in dem beabsichtigten Teilbereich des Aufnahmebereichs, d. h. in der richtigen Kammer des Behälters aufgenommen wird. Allerdings ist unter Synchronisierung hier nicht die unmittelbare Gleichzeitigkeit zu verstehen, sondern eine Synchronisierung mit einem Zeitversatz, der im wesentlichen der Laufzeit des abgelenkten Produktes von der Ablenkstelle des Förderweges zur Weiche des Behälters entspricht.

Das eben vorgestellte Sortierverfahren und eine dafür geeignete Sortiervorrichtung können überall dort sinnvoll angewandt werden, wo ein Sortierverfahren mit einem möglichst unproblematischen Aussortiervorgang durchgeführt werden soll. Insbesondere ist daran gedacht, diese Sortierverfahren und Sortiervorrichtungen wie auch den erfindungsgemäßen Zweikammerbehälter in der pharmazeutischen und/oder Lebensmittelindustrie für das Aussortieren fehlerhafter Produkte zu verwenden.

Weitere Vorteile und Einzelheiten des Sortierverfahrens und dazu geeigneter Vorrichtungen ergeben sich aus der folgenden Erläuterung unter Bezugnahme auf die Zeichnung. Hierin zeigt:
- Fig. 1: eine Momentaufnahme einer Ausführungsform des Sortierver- fahrens in einer schematischen Darstellung,
- Fig. 2a und b: eine Ausführungsform eines erfindungsgemäßen Zweikammerbehälters und dessen Positionierung bezüglich einem Teil einer Ausführungsform der erfindungsgemäßen Sortiervorrichtung in einer Querschnittsdarstellung (quer zu einer Förderrichtung der Sortiervorrichtung) in jeweils unterschied- lichen Betriebsstellungen einer in dem Behälter angeordneten Weiche,
- Fig. 3a und b: eine weitere Ausgestaltung eines erfindungsgemäßen Zweikammerbehäl- ters und dessen Positionierung bezüglich eines Teils der Sortiervorrichtung in einer Aufsicht von oben in jeweils unterschiedlichen Betriebsstellungen einer in dem Behälter angeordneten Weiche,
- Fig. 4a und b: eine Ausgestaltung des Zweikammerbehälters entsprechend der Figuren 2a und 2b, mit weitergehenden technischen Einzelheiten, und
- Fig. 5a und b: eine nochmals weitere Ausgestaltung eines erfindungsgemäßen Zweikam- merbehälters, bei der ein anderes Antriebssystem im Vergleich zu der Aus- gestaltung von Fig. 4a und b gewählt ist.

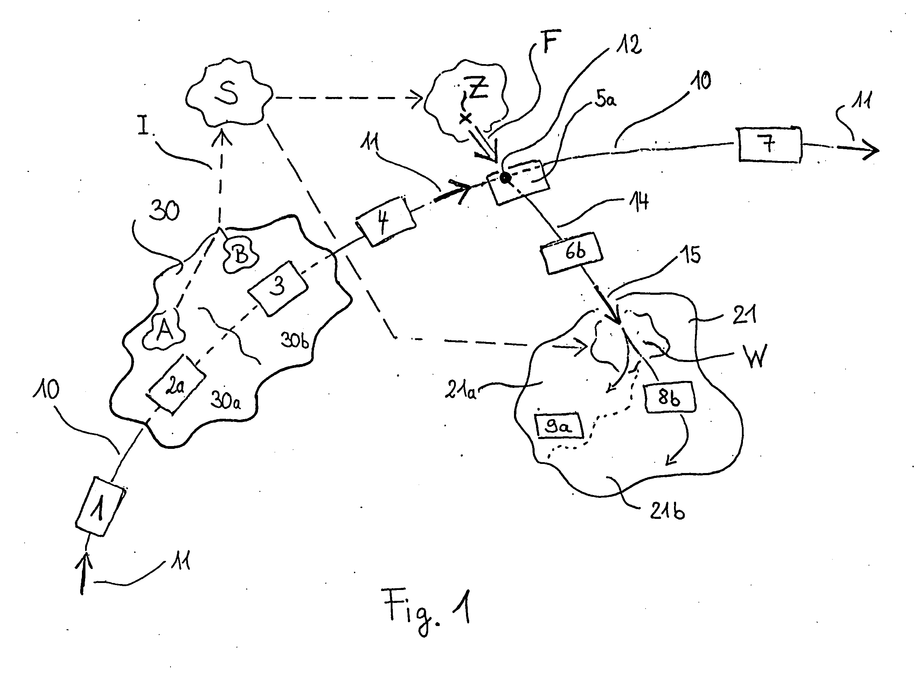

Zunächst wird anhand der in Fig. 1 gezeigten schematischen Darstellung das Sortierverfahren erläutert. In diesem Fall werden neun Produkte, 1, 2a, 3, 4, 5a, 6b, 7, 8b, 9a, sortiert. Dabei werden diese Produkte 1 bis 9 entlang eines Förderweges 10 transportiert, der in einer Förderrichtung (Pfeile) 11 verläuft. Während des Transports unterliegen die Produkte einer Überprüfung 30, wobei die Produkte nach zwei Sortierkriterien A und B geprüft werden. Dabei steht Produkt 1 in der Momentaufnahme von Fig. 1 die Prüfung noch bevor, Produkt 2a wird soeben der Überprüfung 30a auf das Kriterium A hin unterzogen, die für dieses Beispiel positiv ausfällt, während Produkt 3 sich gerade in der Überprüfung 30b auf das Kriterium B befindet, wobei hier die Prüfung negativ ausfällt.

Im Anschluss an die Überprüfung gelangen die Produkte durch ihren Transport längs des Förderweges 10 zu einer gemeinsamen Ablenkstelle 12 des Förderweges 10, wo sie durch eine von einem gemeinsamen Zentrum Z ausgehenden Ablenkkraft F quer zur Förderrichtung 11 abgelenkt werden. Das Produkt 4 befindet sich gerade auf dem Weg zur Ablenkstelle 12, wird diese aber unabgelenkt passieren, da das Produkt 4 keines der Sortierkriterien A oder B erfüllt.

Produkte, die dagegen mindestens eines der beiden Sortierkriterien A oder B erfüllen, werden längs eines gemeinsamen Querwegs 14 abgelenkt. So ist in Fig. 1 zu erkennen, dass das Produkt 5a gerade von der gemeinsamen Ablenkstelle 12 entlang des gemeinsamen Querweges 14 abgelenkt wurde, während das Produkt 6b sich bereits weiter entfernt von der gemeinsamen Ablenkstelle 12 auf dem gemeinsamen Querweg 14 bewegt. Man erkennt gut, dass alle abgelenkten Produkte in den gemeinsamen Querweg 14 eintreten, unabhängig davon, ob sie aufgrund des Sortierkriteriums A oder aufgrund des Sortierkriteriums B abgelenkt worden sind. Auch erfolgte die Ablenkung jeweils durch die von dem gemeinsamen Zentrum Z ausgehende Ablenkkraft F. Das Produkt 7 dagegen hat die Ablenkstelle 12 unabgelenkt durchlaufen, da es weder das Kriterium A noch das Kriterium B erfüllt.

Die Produkte 5a und 6b bewegen sich nun entlang des gemeinsamen Querweges 14 in in Querrichtung bzw. Ablenkrichtung (Pfeil) 15 in Richtung einer Sammelzone. Dort sammeln sich die abgelenkten Produkte in einem gemeinsamen Aufnahmebereich 21. Weiter umfaßt der gemeinsame Aufnahmebereich 21 zwei Teilbereiche 21 a und 21 b, wobei der Teilbereich 21a dazu vorgesehen ist, aufgrund der Erfüllung des Sortierkriteriums A abgelenkte Produkte aufzunehmen, während der Teilbereich 21 b für die Aufnahme der aufgrund des Sortierkriteriums B abgelenkten Produkte vorgesehen ist. Weiter ist vorgesehen, dass die Produkte je nach Sortierkriterium A bzw. B in die Teilbereiche 21 a bzw. 21 b geschleust werden. Dies wird in Fig. 1 durch eine in dem gemeinsamen Aufnahmebereich vorgesehene Weiche W symbolisiert.

Wie in Fig. 1 gezeigt, ist das Produkt 6b bereits fast an der Weiche W angelangt und wird nun dem Produkt 8b folgend in den Teilbereich 21 b des gemeinsamen Aufnahmebereichs 21 geschleust werden. In der hier dargestellten Situation muss die Weiche W folglich nicht umgestellt werden, da das zuletzt die Weiche W passierende Produkt 8b wegen desselben Sortierkriteriums wie das Produkt 6b aussortiert wurde. Bereits vor dem Produkt 8b hat das Produkt 9a die Weiche W passiert, und ist in den Teilbereich 21 a geschleust worden. Entsprechend musste die Weiche W zum Schleusen des Produkts 8b umgestellt werden. Eine weitere Umstellung wird nach dem Schleusen des Produkts 6b erforderlich, da das nachfolgend abgelenkte bzw. aussortierte Produkt 5a aufgrund des anderen erfüllten Sortierkriteriums A abgelenkt wird.

In der in Fig. 1 schematisch dargestellten Ausgestaltung des gemeinsamen Aufnahmebereichs 21 schleust die Weiche W die Produkte mit Sortierkriterium A und die Produkte mit Sortierkriterium B in Ablenkrichtung 15 gesehen nacheinander. Das Schleusen erfolgt also längs der Ablenkrichtung 15 hintereinander. Dabei ist in Fig. 1 gut zu sehen, dass sich der erste Teilbereich 21 a näher an der Ablenkstelle 12 befindet als der zweite Teilbereich 21b. In einer weiteren, in Fig. 1 nicht skizzierten Verfahrensgestaltung könnte das Schleusen auch erfolgen, indem beispielsweise die nach dem erfüllten Kriterium A abgelenkten Produkte nach links und die aufgrund des erfüllten Kriteriums B abgelenkten Produkte nach rechts abgelenkt werden.

Der gesamte Verfahrensablauf wird dabei von einer Steuerung S gesteuert. Dazu erhält die Steuerung S Informationen I über das Ergebnis der Überprüfung 30, also ob ein Produkt abgelenkt werden soll, aber auch über das Ergebnis der beiden Einzelüberprüfungen 30a und 30b, warum das abzulenkende Produkt aussortiert werden soll. Diese Informationen I werden für den Ablenkvorgang und an die Weiche W weitergegeben, wobei natürlich für den Ablenkvorgang an sich die Information relevant ist, ob das Produkt abgelenkt werden soll, also das Ergebnis der Überprüfung 30, während die für die Weiche W relevante Information den Grund für das Aussortieren betrifft.

In dem Sortierverfahren kann jegliche Art von Steuerprozessen eingesetzt werden, solange sichergestellt ist, dass der Ablenkvorgang dahingehend gesteuert wird, ein abzulenkendes Produkt abzulenken, und die Weiche W dazu gebracht wird, eine Stellbewegung vorzunehmen, allerdings nur, wenn das nächste zu schleusende Produkt in einen anderen Teilbereich geschleust werden soll, als das zuletzt davor geschleuste Produkt. Selbstverständlich müssen die Steuerbefehle für den Ablenkvorgang und die Weiche W entsprechend zeitversetzt sein. In der in Fig. 1 dargestellten Momentaufnahme, bei der gerade der Steuerbefehl zum Ablenken des Produktes 5a gegeben worden ist und entsprechend das Produkt 5a gerade abgelenkt wird, bedeutet dies, dass die Weiche W natürlich noch nicht den das Produkt 5a betreffenden Steuerbefehl zur Umstellung für das Schleusen in den Bereich 21 a erhalten darf (das zuletzt geschleuste Produkt war 8b). Denn diese Umstellung darf erst erfolgen, wenn auch das Produkt 6b die nicht umgestellte Weiche W passiert hat. Somit erfolgt die Steuerung synchronisiert, aber mit entsprechend nötigem Zeitversatz.

Es kann natürlich der Fall eintreten, dass ein einzelnes Produkt beide Sortierkriterien A und B erfüllt. In diesem Fall könnte die Weiche dahingehend gesteuert werden, daß das eine Sortierkriterium hinsichtlich der Weichenstellung gegenüber dem anderen Sortierkriterium Vorrang hat. Dadurch ist es beispielsweise möglich, solche doppelt fehlerhaften Produkte in den Teilbereich zu schleusen, der für die Aufnahme der Produkte mit derjenigen Fehleigenschaft vorgesehen ist, die gegenüber der anderen als dominant angesehen wird. Eine solche Rangordnung kann von der Steuereinrichtung S eingestellt werden. Alternativ ist natürlich auch denkbar, solche doppelt fehlerhaften Produkte in einen dritten, nicht gezeigten Teilbereich des Aufnahmebereichs 21 zu schleusen.

Die in Fig. 1 schematisch dargestellte Momentaufnahme entspricht nicht unbedingt einer realistischen Momentaufnahme des tatsächlichen Sortierverfahrens, sondern dient vielmehr der Erläuterung des Prinzips des erfindungsgemäßen Sortierverfahrens. So ist es entgegen der Darstellung in Fig. 1 beispielsweise keinesfalls erforderlich, dass die Geschwindigkeiten der Produkte bei Transport und Ablenkung sowie die Produktdichte entlang des Förderweges 10 derart ist, dass zwei abgelenkte Produkte (5a, 6b) sich gemeinsam auf dem gemeinsamen Querweg 14 befinden müssen, selbst wenn sie auf dem Förderweg 10 direkt hintereinander transportiert worden sind. Insbesondere können auch mehr als zwei Sortierkriterien und eine Weiche mit einer entsprechenden Anzahl von Stellungen verwendet werden.

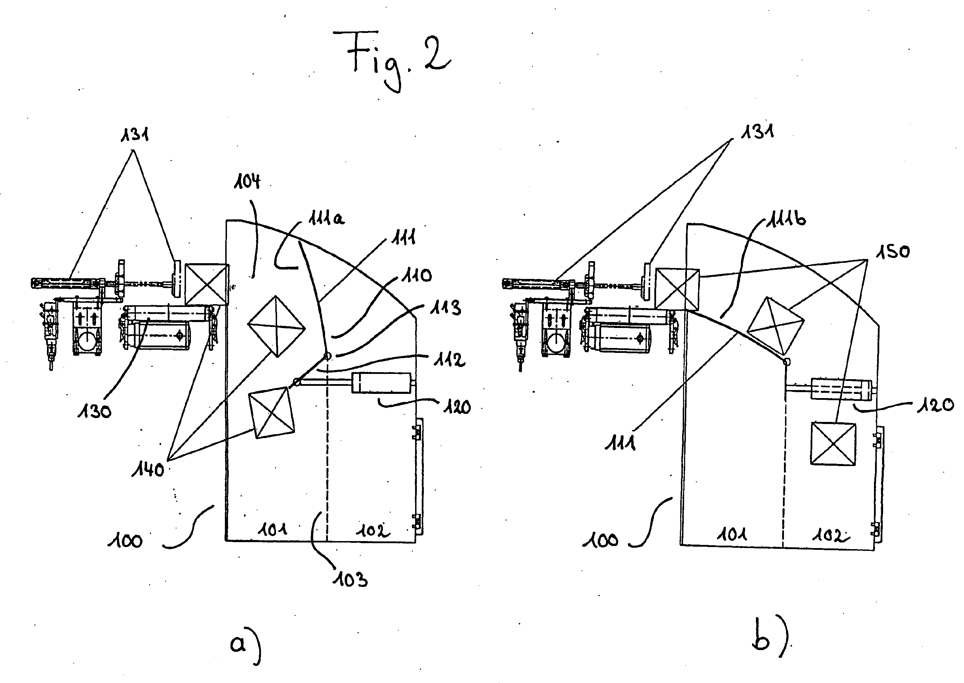

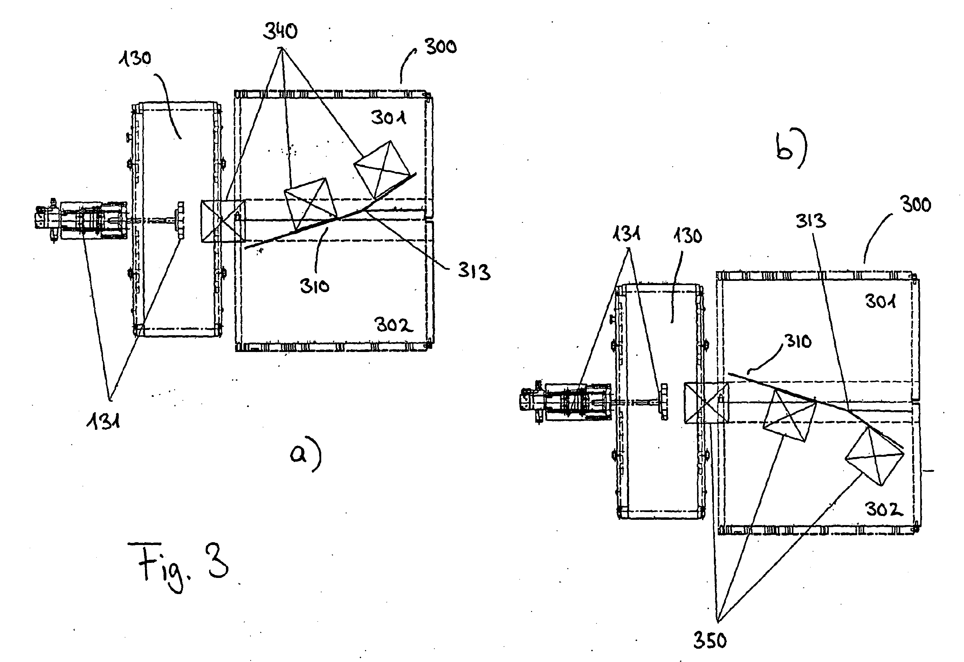

Die Grundkomponenten für eine solche Sortiervorrichtung, insbesondere eine Fördereinrichtung, eine Prüfeinrichtung und eine Ablenkeinrichtung sind allesamt wohlbekannt und werden nicht weiter detailliert beschrieben. In den Fig. 2 und 3 ist beispielhaft lediglich ein Teil der Sortiervorrichtung, nämlich ein Förderband 130 und ein Ausschieber 131 dargestellt. Im folgenden wird statt von einem ersten/zweiten erfüllten Sortierkriterium auch von einer ersten/zweiten Fehleigenschaft gesprochen, sowie von aussortierten Produkten anstelle von abgelenkten Produkten.

Weiter zeigen die Fig. 2a und Fig. 2b einen Zweikammerbehälter 100, der einen im wesentlichen rechteckigen Querschnitt aufweist. Das Innere des Behälters 100 ist in einem unteren Bereich in zwei Kammern 101 und 102 aufgeteilt, die von einem sich vom Boden des Behälters nach oben hin erstreckenden Trennbereich 103 voneinander getrennt sind. Die erste Kammer 101 dient der Aufnahme aussortierter Produkte mit einer ersten Fehleigenschaft, während die zweite Kammer 102 der Aufnahme aussortierter Produkte mit einer zweiten Fehleigenschaft dient. Der Trennbereich 103 sorgt dafür, dass sich die Produkte mit unterschiedlichen Fehleigenschaften nicht mehr im Behälter vermengen können, sobald sie in ihre jeweilige Kammer 101 bzw. 102 gelangt sind. Der Zweikammerbehälter 100 wird so aufgestellt, dass die aussortierten Produkte 140, 150 zu einem im oberen Bereich des Behälters 100 vorgesehenen Empfangsbereich 104 gelangen.

Eine innerhalb des Behälters 100 angeordnete Weiche 110 bestimmt durch die von ihr eingenommene Stellung, in welche Kammer 101 oder 102 die aussortierten Produkte 140,150 gelangen. In der in Fig. 2a dargestellten Weichenstellung ist den aussortierten Produkten 140 der Zugang zur Kammer 102 versperrt, und sie gelangen in die Kammer 101. Dagegen ist in der in Fig. 2b gezeigten Weichenstellung den Produkten 150 der Zugang zu der Kammer 101 versperrt, und sie gelangen in die Kammer 102. Um von der in Fig. 2a gezeigten Weichenstellung in die in Fig. 2b gezeigte Weichenstellung zu gelangen, kann die Weiche 110 um eine bodenparallele Achse 113 verschwenkt werden. Dabei ist die Schwenkachse 113 in der in Fig. 2 dargestellten Aufstellung des Behälters 100 bezüglich einem Förderband 130 der Sortiervorrichtung derart angeordnet, dass sie auch parallel zur Förderrichtung und unterhalb der Höhe des Förderbands 130 verläuft.

Die Weiche 110 selbst hat als Hauptkörper eine plattenartige, schwach gekrümmte Klappe 111. Dabei bildet die Klappe 111 der Weiche 110 einen Sperr- und Gleitbereich der Weiche 110. Eine Oberseite 111 b der Klappe 111 dient den aussortierten Produkten 150 in der in Fig. 2b dargestellten Weichenstellung als Gleitunterlage, damit diese gleitend in die zweite Kammer 102 befördert werden. Gleichzeitig stellt die Klappe 111 eine Brücke dar, die die erste Kammer 101 überspannt und somit verhindert, daß abgelenkte Produkte 150 in die erste Kammer 101 gelangen können.

In der in Fig. 2a dargestellten Weichenstellung sperrt dagegen die Klappe 111 den Zugang zur zweiten Kammer 102. Aussortierte Produkte 140, die ggf. durch die Ablenkung mittels eines quer zur Förderrichtung wirkenden Ausschiebers 131 genug Horizontalgeschwindigkeit besitzen, dass sie ohne Vorhandensein der Klappe 111 in die zweite Kammer 102 gelangen könnten, prallen an einer Unterseite 111 a der Klappe 111 ab und gleiten bzw. fallen nach unten, um schließlich in die erste Kammer 101 zu gelangen.

Die Betätigung eines Stellvorgangs der Weiche erfolgt mittels eines an die Weiche gekoppelten Antriebs 120. Dazu ist der Antrieb 120, wie in Fig. 2 zu sehen ist, über einen Hebelarm 112 an die Weiche 110 gekoppelt, indem der Hebelarm 112 an einer längs der Schwenkachse 113 verlaufenden Welle befestigt ist, die wiederum fest mit der Klappe 111 verbunden ist. Hebelarm 112 und Klappe 111 schließen dabei einen Winkel von etwa 120 Grad ein. Dabei ist hier vorgesehen, daß sich die Welle über eine Behälterwandung hinaus erstreckt, und Hebelarm 112 und Antrieb 120 außerhalb des Behälters angeordnet sind. So wird der Stellmechanismus nicht den herabfallenden aussortierten Produkten ausgesetzt oder durch bereits im Behälter gesammelte Produkte behindert. Die Welle kann mit der Klappe 111 einstückig gebildet sein, oder auch teilweise von einer Randkante der Klappe 111 gebildet sein, wobei dann ein bis nach außen ragender Abschnitt der Welle an der Klappe 111 befestigt ist. Die Klappe 111 wie auch der Hebelarm 112 können aber auch an einer stangenartig ausgebildeten Welle z.B. durch Schweißen befestigt sein.

Das Verstellen der Weiche wird in der in Fig. 2 gezeigten Ausführungsform von einem als Kolben-Zylinder-Anordnung vorgesehenen Antrieb 120 bewirkt. Dabei ist der Kolben der Kolben-Zylinder-Anordnung in der in Fig. 2b gezeigten Weichenstellung vollständig eingefahren, und wird bei benötigter Weichenumstellung vollständig aus dem Kolben ausgefahren, um die in Fig. 2a dargestellte Weichenstellung erreichen. Diese Realisierung des Antriebs ist selbstverständlich nur eine von mehreren Möglichkeiten, die Weichenumstellungen zu bewirken. Beispielsweise könnten auch Drehmotoren direkt an die der Schwenkachse 113 entsprechenden Welle gekoppelt werden und durch Drehung das Schwenken der Weiche 110 bewirken. Auch können sowohl einer, als auch mehrere Antriebe vorgesehen sein.

Nicht dargestellt ist in Fig. 2 eine Kopplung des Antriebs 120 an eine Steuervorrichtung für dessen Steuerung. Dennoch ist eine solche Steuerung vorgesehen, die sowohl den Ausschieber 131 als auch den Antrieb 120 wie oben beschrieben zeitversetzt steuert.

In Fig. 3 ist noch eine weitere Ausgestaltung eines erfindungsgemäßen Zweikammerbehälters dargestellt. Wie in der Aufsicht von oben gut zu erkennen ist, sind dabei zwei Kammern 301 und 302 des Zweikammerbehälters 300 in Förderrichtung des Förderbands 130 nebeneinander angeordnet. Entsprechend werden die abgelenkten Produkte 340 mit einer ersten Fehleigenschaft nach links in die erste Kammer 301 geschleust, wie in Fig. 3a dargestellt, und die aussortierten Produkte 350 mit zweiter Fehleigenschaft in die zweite Kammer 302 nach rechts geschleust, wie in Fig. 3b dargestellt. Das Schleusen wird von einer winkelprofilartigen Weiche 310 bewirkt, die hier um eine vertikale Achse 313 schwenkbar gelagert ist. In Fig. 3 ist der Antrieb zum Bewegen der Weiche 310 nicht dargestellt.

Im Vergleich der Fig. 2 und 3 erkennt man, daß der in Fig. 3 dargestellte Zweikammerbehälter 300 einfacher gestaltet ist, allerdings einen größeren Platzbedarf in Förderrichtung des Förderbands 110 aufweist, als der in Fig. 2 dargestellte Zweikammerbehälter. Je nach vorhandenen Ausgangsbedingungen kann daher die eine oder andere Variante vorteilhafter sein.

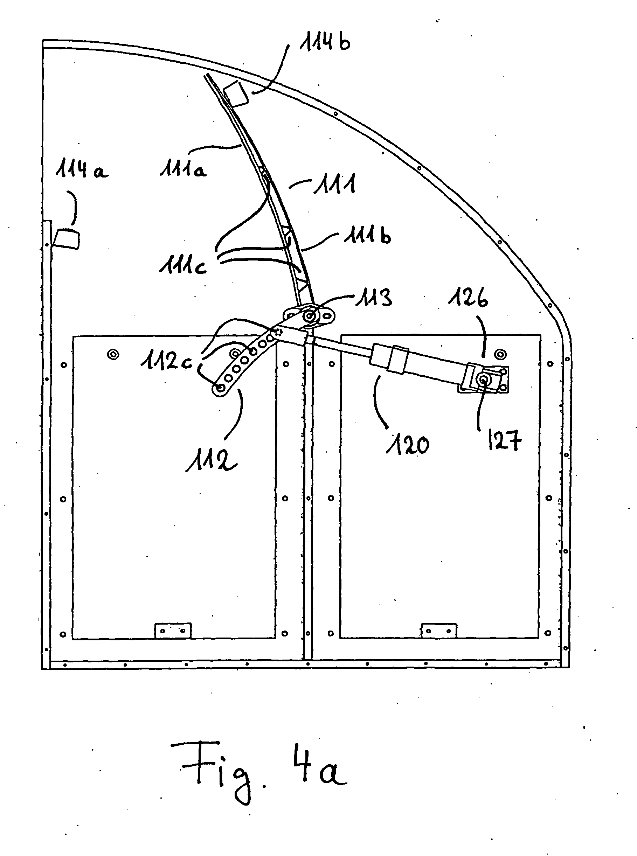

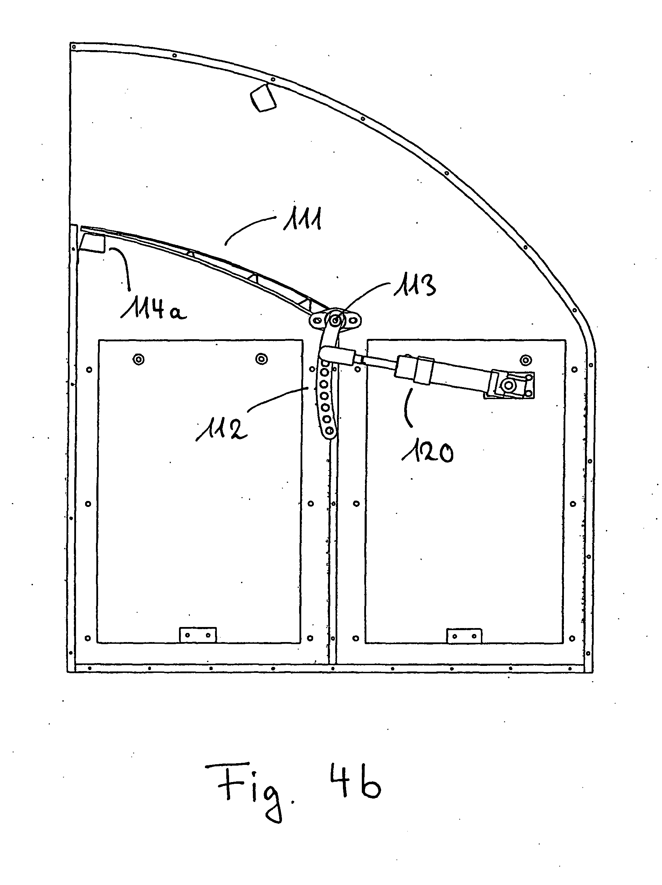

Aus den Figuren 4a und 4b sind noch weitere Einzelheiten des erfindungsgemäßen Zweikammerbehälters des in Fig. 2a und b gezeigten Typs ersichtlich. Dabei entspricht die in Fig. 4a gezeigte Weichenstellung derjenigen aus Fig. 2a, und die in Fig. 4b gezeigte Weichenstellung derjenigen aus Fig. 2b. Man erkennt, daß das kolbenseitige Ende der Kolben-Zylinder-Anordnung 120 an einem Befestigungsbereich 112c des Hebelarms 112 befestigt ist, und zwar in diesem Fall an dem der Schwenkachse 113 nächstliegenden Befestigungsbereich. Zylinderseitig ist die Kolben-Zylinder-Anordnung 120 bezüglich einer Linearbewegung fix an einem behälterseitigen Befestigungsbereich 126 befestigt, allerdings in diesem Bereich um eine Achse 127 drehbar gelagert.

Aus der in Fig. 4a gezeigten Konstellation ist ersichtlich, daß die Klappe 111 nun bei ausgefahrener Kolbenstange eine maximale effektive Klappenhöhe erreicht. Man erkennt, daß die Oberseite 111 b der Klappe 111 gegen ein an einem oberen Bereich des Behälters befestigtes oberes Anschlagelement 114b anschlägt. So können Stöße, die von Produkten herrühren, welche gegen die Unterseite 111a der Klappe 111 prallen, über das Anschlagelement 114b auf den Behälter übertragen, und belasten nicht die Antriebskonstruktion. Ebenfalls ist aus Fig. 4a zu erkennen, daß durch eine Befestigung des kolbenseitigen Endes der Kolben-Zylinder-Anordnung 120 an einem Befestigungsbereich 112c, der weiter von der Schwenkachse 113 entfernt ist, wodurch Kombination aus Hebelarm 112 und Klappe 111 im Gegenuhrzeigersinn um die Schwenkachse 113 etwas verschwenkt wird, eine geringere effektive Klappenhöhe, also Höhenposition des von der Schwenkachse 113 entfernten Endes der Klappe 111 erreichbar ist. So muß die Klappe 111 bei entsprechend geeigneter Wahl des Befestigungsbereiches 112c bei entsprechend kleinen auszusortierenden Produkten nicht maximal angehoben werden, was eine Erleichterung für den Antrieb bedeutet.

Aus Fig. 4b, bei der die Unterseite 111a der Klappe 111 gegen das untere Anschlagelement 114a schlägt, ist noch einmal das Prinzip der mehrfachen Befestigungsbereiche 112c gut zu erkennen. Diese sind nämlich, folgend der Form des Hebelarms 112, im wesentlichen kreisbogenartig angeordnet, und zwar auf einem Kreis um die Achse 127 mit einem Radius, der durch die Länge der Kolben-Zylinder-Anordnung 120 bei eingefahrenem Kolben bestimmt ist. Auf diese Weise ist sichergestellt, daß die in Fig. 4b gezeigte Position der Klappe 111 eingenommen wird, unabhängig davon, an welchem Befestigungsbereich 112c des Hebelarms 112 das kolbenseitige Ende der Kolben-Zylinder-Anordnung 120 befestigt ist.

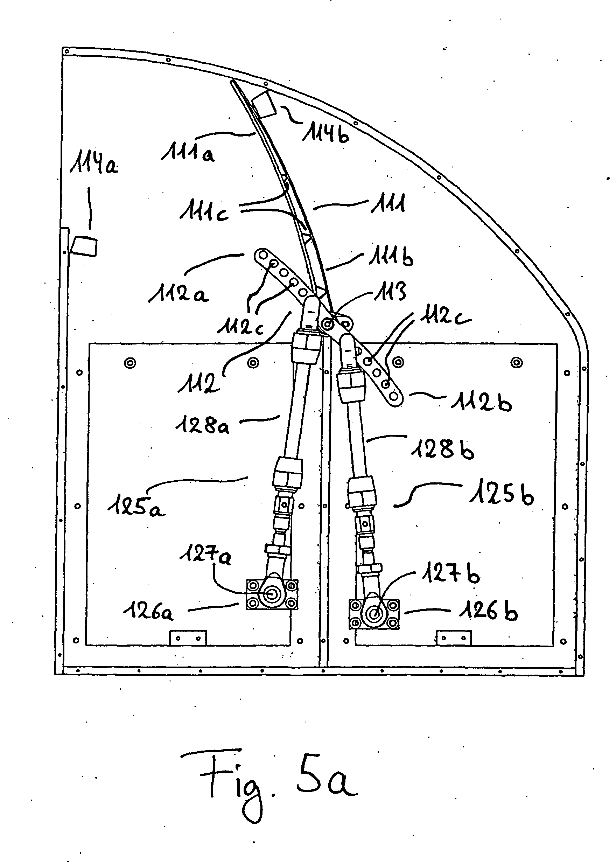

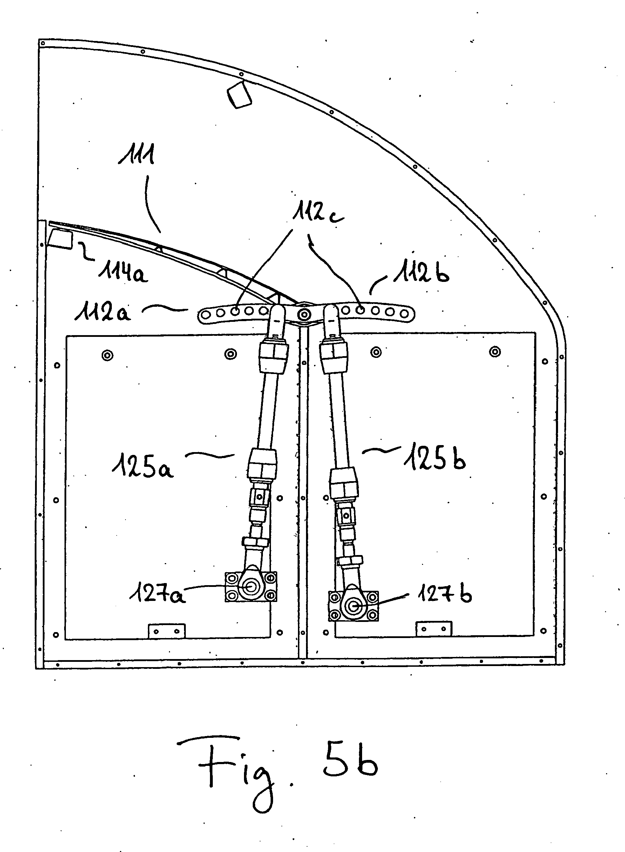

In den Figuren 5a und 5b ist eine weitere Antriebsart zum Bewegen der Klappe 111 dargestellt. Man erkennt, daß der Hebelarm 112 zweiarmig ausgebildet ist, wobei sich ein Arm 112a in Blickrichtung der Figuren 5a und 5b bezüglich der Schwenkachse 113 nach links erstreckt, während sich der Arm 112b nach rechts erstreckt. An jeden Arm 112a, 112b des Hebelarms 112 ist je ein Zugaktuator 125a, 125b an einem seiner Enden befestigt, während das andere Ende jeweils behälterseitig an einem Fixpunkt 126a, 126b (bezüglich einer Linearbewegung) festgelegt ist. Dabei sind die entsprechenden Enden der Zugaktuatoren 125a, 125b an den behälterseitigen Fixpunkten 126a, 126b drehbar um Achsen 127a, 127b gelagert. Die mehrfachen Befestigungsbereiche 112c dienen in Kombination mit der drehbaren Lagerung 127a, 127b einer unterschiedlichen Einstellung der Zugaktuatoren bezüglich des zweiseitigen Hebelarms 112, welche bereits oben bei der Beschreibung der Figuren 4a und 4b beschrieben wurde.

Die Zugaktuatoren sind von der Funktionsweise her Kunstmuskeln, die einen sich zusammenziehbaren Bereich 128a, 128b aufweisen. In der in Fig. 5a gezeigten Situation ist der Kunstmuskel 125a entspannt, und der Bereich 128a weist eine Maximallänge auf. Dagegen ist der zweite Kunstmuskel 125b gespannt, und der Bereich 128b ist maximal zusammengezogen.

Einfach ausgedrückt handelt es sich bei dem Kunstmuskelprinzip bzw. den Bereichen 128a, 128b um einen Schlauch, der sich unter Druck zusammenzieht. Dabei wirkt ein fluidisch dichter, flexibler Schlauch mit einer Umspinnung aus Fasern als Festigkeitsträger in einem rautenförmigen Geflecht derart zusammen, daß eine dreidimensionale Gitterstruktur entsteht. Durch ein einströmendes Medium, hier vorzugsweise Druckluft, wird die Gitterstruktur in Umfangsrichtung verformt, wobei eine Zugkraft in axialer Richtung entsteht. Die Gitterstruktur sorgt also für eine Verkürzung des Kunstmuskels bei steigendem innendruck. Dabei können Verkürzungen von ca. 25 % der Ausgangslänge (Nominallänge) erreicht werden, von denen etwa die ersten 15 % energetisch sinnvoll zu erreichen sind. Bespannt oder Entlastet wirkt der Kunstmuskel darüber hinaus wie eine Art Feder, indem er sich ändernden äußeren Kräften auf den Kunstmuskel eine Federkraft entgegensetzt.

Der Kunstmuskel ist so gebaut, daß er lediglich eine Zugkraft hervorruft. Dadurch unterscheidet er sich auch funktionell wesentlich von der Kolben-Zylinder-Anordnung, die sowohl Zug- als auch Schubkräfte erzeugen kann. Um dennoch eine Bewegung in zwei entgegengesetzte Richtung aktiv ermöglichen zu können, sind die zwei Kunstmuskeln 125a, 125b derart eingesetzt, daß sie komplementär wirken, d.h. für die in Fig. 5a und 5b gezeigte Darstellung, daß man, um von der in der Fig. 5a gezeigten Weichenstellung in die in Fig. 5b gezeigte Weichenstellung zu gelangen , der linke Kunstmuskel 125a angesprochen werden muß, während gleichzeitig der rechte Kunstmuskel 125b druckentlastet wird. Auf diese Art und Weise erzeugt der linke Kunstmuskel 125a ein Drehmoment im Gegenuhrzeigersinn, dem der rechte Kunstmuskel 125b entlastet nur ein geringes entgegengesetzt gerichtetes Trägheitsmoment entgegenhält. Folglich schwenkt der Hebelarm 112 in die in Fig. 5b gezeigte Stellung, und mit dem Hebelarm 112 auch die an ihn starr gekoppelte Klappe 111. In Fig. 5b ist gut zu erkennen, daß nun der linke Kunstmuskel 125a bzw. sein zusammenziehbarer Bereich 128a verkürzt ist, während die andere Seite 125b, 128b entlastet ist.

Üblicherweise werden die Kunstmuskeln mit Druckluft von bis zu 8 bar angesprochen, wobei Anfangskräfte von bis zu 6000 N entstehen. Diese hohen Anfangskräfte bewirken bei dem vergleichsweise geringen Gewicht des Kunstmuskels Beschleunigungen von bis zu 50 m/s², wodurch vorteilhaft sehr hohe Taktfrequenzen für die Klappen- bzw. Weichenumstellung erreicht werden können. Auch kann sich der Kunstmuskel deutlich schneller entspannen, als ein Zylinder einer Kolben-Zylinder-Anordnung einfahren kann. Daher ist grundsätzlich eine höhere Taktfrequenz als mit Zylindern möglich. Darüber hinaus ist durch den Federeffekt der Kunstmuskeln die Klappe sozusagen in eine Luftfeder eingespannt. So kann die Klappenbewegung grundsätzlich sanfter erfolgen, da der Federeffekt der Muskel auch ein sanfteres Bremsen ermöglicht. Auch können so auftretende Schläge gegen die Klappe, die beispielsweise von aussortierten Produkten herrühren, sanfter aufgefangen werden.

Weitere Vorteile der Kunstmuskeln gegenüber der Kolben-Zylinder-Anordnung betreffen die Tatsache, daß durch das Fehlen beweglicher Teile kein Stick-Slip-Effekt auftritt, und der Kunstmuskel gegenüber äußeren Staub- und Schmutzeinwirkungen vergleichsweise robust ist. So können mit Kunstmuskeln vergleichsweise höhere Lebensdauern erreicht werden.

Wie auch noch aus den Figuren 4 und 5 hervorgeht, ist die Klappe 111 in einer Weise gestaltet, daß sie eine möglichst hohe Steifheit bzw. Festigkeit bei möglichst geringem Gewicht besitzt. Dazu ist eine plattenartige Unterseite 111a mit einer plattenseitigen Oberseite 111b über Zwischenstreben 111c verbunden. Durch ein geringes Gewicht der Klappe werden effektiv höhere Beschleunigungen für die Klappenbewegung und damit höhere Taktfrequenzen erreicht.

Die Erfindung ist nicht auf die in den Figuren dargestellten Ausgestaltungen beschränkt, sondern die in der obigen Beschreibung sowie in den Ansprüchen offenbarten Merkmale der Erfindung können sowohl einzeln als auch in beliebiger Kombination für die Verwirklichung der Erfindung in ihren verschiedenen Ausführungsformen wesentlich sein.

### Verzeichnis der Bezugszeichen

- A: Sortierkriterium
- B: Sortierkriterium
- F: Ablenkkraft
- I: Information
- S: Steuerung
- W: Weiche
- Z: gemeinsames Zentrum
- 1-9: Produkte
- 1, 3, 4: nicht abzulenkende Produkte
- 2a: abzulenkendes Produkt
- 5a, 6b: abgelenkte Produkte
- 7: nicht abgelenktes Produkt
- 8b, 9a: abgelenkte und geschleuste Produkte
- 10: Förderweg
- 11: Förderrichtung
- 12: gemeinsame Ablenkstelle
- 14: gemeinsamer Querweg
- 15: Querrichtung (Ablenkrichtung)
- 21: gemeinsamer Aufnahmebereich
- 21 a, 21 b: Teilbereiche
- 30: Überprüfung Sortierkriterien
- 30a: Überprüfung Kriterium A
- 30b: Überprüfung Kriterium B
- 100, 300: Zweikammerbehälter
- 101,301: erste Kammer
- 102, 302: zweite Kammer
- 103: Trennung
- 104: Empfangsbereich
- 110,310: Weiche
- 111: Klappe
- 111a: Unterseite
- 111b: Oberseite
- 111 c: Streben
- 112: Hebelarm
- 112a: erster Arm
- 112b: zweiter Arm
- 112c: Befestigungsbereiche
- 113: horizontale Schwenkachse
- 114a: Anschlagelement
- 114b: Anschlagelement
- 120: Kolben-Zylinder-Anordnung (Antrieb)
- 125a: Zugaktuator (Antrieb)
- 125b: Zugaktuator (Antrieb)
- 126a: behälterseitige Befestigung
- 126b: behälterseitige Befestigung
- 127a: Achse
- 127b: Achse
- 128a: komprimierbarer Bereich
- 128b: komprimierbarer Bereich
- 130: Förderband
- 131: Ausschieber
- 140, 340: Produkte mit erster Fehleigenschaft
- 150, 350: Produkte mit zweiter Fehleigenschaft
- 313: Vertikale Schwenkachse

## Patentansprüche

1. Behälter (100, 300) zur Aufnahme eines von einer Sortiervorrichtung aus einer Anzahl die Sortiervorrichtung durchlaufender Produkte aufgrund der Erfüllung eines ersten Sortierkriteriums aussortierten Produkts, mit einer ersten Kammer (101, 301) zur Aufnahme des aussortierten Produkts (140, 340) bei einem erfüllten ersten Sortierkriterium und einer von der ersten Kammer getrennten zweiten Kammer (102, 302), **dadurch gekennzeichnet, daß**
der Behälter (100, 300) zur Aufnahme von aufgrund der Erfüllung von mindestens zwei Sortierkriterien aussortierten Produkte der durchlaufenden Produkte vorgesehen ist, die zweite Kammer (102, 302) zur Aufnahme des aussortierten Produkts (150, 350) bei einem erfüllten zweiten Sortierkriterium vorgesehen ist, und daß
der Behälter (100, 300) eine in Abhängigkeit von den Sortierkriterien gesteuerte Weiche (110, 310) aufweist, die dem aussortierten Produkt in einer ersten Betriebsstellung den Zugang zu der ersten Kammer (101, 301) ermöglicht und den Zugang zu der zweiten Kammer (102, 302) sperrt, und in einer zweiten Betriebsstellung den Zugang zu der zweiten Kammer (102, 302) ermöglicht und den Zugang zu der ersten Kammer (101, 301) sperrt.

2. Behälter nach Anspruch 1, **dadurch gekennzeichnet, daß** die Weiche (310) um eine im wesentlichen parallel zur Richtung der Schwerkraft verlaufende Achse (313) schwenkbar ist, und die beiden Betriebsstellungen einer Links-/Rechtsabzweigung der aussortierten Produkte bezüglich einer durch die Schwenkachse (313) sowie eine quer zur Schwenkachse (313) verlaufende Richtung definierten Ebene entsprechen.

3. Behälter nach Anspruch 1, **dadurch gekennzeichnet, daß** die Weiche (110) um eine quer zur Richtung der Schwerkraft verlaufende Achse (113) schwenkbar ist, und die beiden Betriebsstellungen einer Hintereinander-Abzweigung der aussortierten Produkte bezüglich einer durch die Schwenkachse (113) sowie eine quer zur Schwenkachse (113) verlaufende Richtung definierten Ebene entsprechen.

4. Behälter nach einem der Ansprüche 1 bis 3, **dadurch gekennzeichnet, daß** die Weiche (110) winkelprofilartig ausgebildet ist, wobei insbesondere die Schwenkachse (113) der Weiche (110) entlang einer durch das Winkelprofil definierten Kante der Weiche (110) verläuft.

5. Behälter nach einem der Ansprüche 1 bis 4, **gekennzeichnet durch** einen Antrieb, der die Weiche (110) zur Einnahme einer gewünschten Betriebsstellung bewegen kann.

6. Behälter nach Anspruch 5, **dadurch gekennzeichnet, daß** der Antrieb an die Weiche (110) über einen an einer sich in Richtung der Schwenkachse (113) erstreckenden Welle der Weiche (110) angreifenden Hebelarm (112) gekoppelt ist.

7. Behälter nach Anspruch 5 oder 6, **dadurch gekennzeichnet, daß** der Antrieb eine pneumatisch bewegbare Kolben-Zylinder-Anordnung (120) aufweist.

8. Behälter nach einem der Ansprüche 5 bis 7, **dadurch gekennzeichnet, daß** der Antrieb einen sich unter Druck zusammenziehenden Zugaktuator (125a, 125b) aufweist.

9. Behälter nach Anspruch 6 und 8, **dadurch gekennzeichnet, daß** der Hebelarm (112) zweiarmig ausgebildet ist, ein erster Zugaktuator (125a) zwischen einem Arm (112a) des Hebelarms (112) und einem behälterseitigen Fixpunkt (126a) und ein zweiter Zugaktuator (125b) zwischen dem anderen Arm (112b) des Hebelarms (112) und einem behälterseitigen Fixpunkt (126b) derart eingespannt sind, daß eine Druckbeaufschlagung des ersten Zugaktuators (125a) ein Drehmoment bezüglich der Schwenkachse (113) in eine erste Richtung bewirkt, und eine Druckbeaufschlagung des zweiten Zugaktuators (125b) ein Drehmoment in eine der ersten Richtung entgegengesetzte zweite Richtung bewirkt.

10. Behälter nach einem er Ansprüche 6 bis 9, **dadurch gekennzeichnet, daß** der Hebelarm (112) mehrere Befestigungsbereiche (112c) für die Ankopplung an den Antrieb aufweist.

11. Behälter nach einem der Ansprüche 7 bis 10, **dadurch gekennzeichnet, daß** die Kolben-Zylinder-Anordnung (120)/der Zugaktuator (125a, 125b) an seiner/seinem behälterseitigen Befestigungspunkt (126, 126a, 126b) um eine Achse (127, 127a, 127b) drehbar gelagert ist, welche insbesondere parallel zur Schwenkachse (113) verläuft.

## Claims

1. A container (100, 300) for holding a product selected by a sorting apparatus from a number of products passing through the sorting apparatus upon the basis of fulfilment of a first sorting criterion, comprising a first chamber (101, 301) for holding the selected product (140, 340) with a fulfilled first sorting criterion and a second chamber (102, 302) separated from the first chamber, **characterised in that**
the container (100, 300) is provided for holding products selected from the products passing through upon the basis of fulfilment of at least two sorting criteria, the second chamber (102, 302) is provided for holding the selected product (150, 350) with a fulfilled second sorting criterion, and that
the container (100, 300) has a separator (110, 310) controlled dependently upon the sorting criteria and which in a first operating position allows the selected product access to the first chamber (101, 301) and blocks access to the second chamber (102, 302), and in a second operating position allows access to the second chamber (102, 302) and blocks access to the first chamber (101, 301).

2. The container according to Claim 1, **characterised in that** the separator (310) can be pivoted about an axis (313) extending substantially parallel to the direction of the force of gravity, and the two operating positions correspond to a left/right branch-off of the selected products in relation to a plane defined by the pivot axis (313) and a direction extending at right angles to the pivot axis (313).

3. The container according to Claim 1, **characterised in that** the separator (110) can be pivoted about an axis (113) extending at right angles to the direction of the force of gravity, and the two operating positions correspond to a consecutive branch-off of the selected products in relation to a plane defined by the pivot axis (113) and a direction extending at right angles to the pivot axis (113).

4. The container according to any of Claims 1 to 3, **characterised in that** the separator (110) is formed like an angle profile, the pivot axis (113) of the separator (110) in particular extending along an edge of the separator (110) defined by the angle profile.

5. The container according to any of Claims 1 to 4, **characterised by** a drive that can move the separator (110) in order to adopt a desired operating position.

6. The container according to Claim 5, **characterised in that** the drive is coupled to the separator (110) by means of a lever arm (112) engaging with a shaft of the separator (110) extending in the direction of the pivot axis (113).

7. The container according to Claim 5 or 6, **characterised in that** the drive has a pneumatically moveable piston/cylinder arrangement (120).

8. The container according to any of Claims 5 to 7, **characterised in that** the drive has a traction actuator (125a, 125b) contracting under pressure.

9. The container according to Claim 6 and 8, **characterised in that** the lever arm (112) is formed with two arms, a first traction actuator (125a) is clamped between an arm (112a) of the lever arm (112) and a fixed point (126a) on the container side, and a second traction actuator (125b) between the other arm (112b) of the lever arm (112) and fixed point (126b) on the container side, that application of pressure to the first traction actuator (125a) brings about a torque in relation to the pivot axis (113) in a first direction, and application of pressure to the second traction actuator (125b) brings about a torque in a second direction opposing the first direction.

10. The container according to any of Claims 6 to 9, **characterised in that** the lever arm (112) has a number of attachment areas (112c) for the coupling to the drive.

11. The container according to any of Claims 7 to 10, **characterised in that** the piston/cylinder arrangement (120)/the traction actuator (125a, 125b) is mounted rotatably on its attachment point (126, 126a, 126b) on the container side about an axis (127, 127a, 127b) which extends in particular parallel to the pivot axis (113).

## Revendications

1. Conteneur (100, 300) destiné à recevoir un produit, trié par un appareil de triage, parmi une pluralité de produits transportés dans l'appareil de triage compte tenu que ce produit remplit un premier critère de triage, le conteneur comportant un premier compartiment (101, 301) destiné à recevoir le produit trié (140, 340) compte tenu qu'il remplit un premier critère de triage et un second compartiment (102, 302) distinct du premier compartiment, **caractérisé en ce que**
le conteneur (100, 300) est prévu pour recevoir des produits triés compte tenu que ces produits remplissent au moins deux critères de triage parmi les produits transportés, le second compartiment (102, 302) est prévu pour recevoir le produit trié (150, 350) compte tenu qu'il remplit un deuxième critère de triage, et **en ce que**
le conteneur (100, 300) présente un dispositif d'aiguillage (110, 310) qui est commandé en fonction des critères de triage et qui permet au produit trié, dans une première position de service, d'accéder au premier compartiment (101, 301) en lui excluant l'accès au second compartiment (102, 302), et, dans une seconde position de service, d'accéder au second compartiment (102, 302) en lui excluant l'accès au premier compartiment (101, 301).

2. Conteneur selon la revendication 1, **caractérisé en ce que** le dispositif d'aiguillage (310) peut pivoter sur un axe (313) qui s'étend de manière sensiblement parallèle à la direction de la gravité, et **en ce que** les deux positions de service correspondent à une déviation vers la gauche et vers la droite des produits triés par rapport à un plan défini par l'axe de pivotement (313) et la direction transversale à l'axe de pivotement (313).

3. Conteneur selon la revendication 1, **caractérisé en ce que** le dispositif d'aiguillage (110) est susceptible de pivoter sur un axe (113) qui s'étend de manière transversale à la direction de la gravité, et les deux positions de service correspondent à une déviation séquentielle des produits triés par rapport à un plan défini par l'axe de pivotement (113) et une direction transversale à l'axe de pivotement (113).

4. Conteneur selon l'une des revendications 1 à 3, **caractérisé en ce que** le dispositif d'aiguillage (110) est conçu avec un profil angulaire, moyennant quoi, notamment, l'axe de pivotement (113) du dispositif d'aiguillage (110) se prolonge le long d'une arête du dispositif d'aiguillage (110) définie par le profil angulaire.

5. Conteneur selon l'une des revendications 1 à 4, **caractérisé par** un dispositif d'entraînement qui est en mesure de faire passer le dispositif d'aiguillage (110) dans une position de service souhaitée.

6. Conteneur selon la revendication 5, **caractérisé en ce que** le dispositif d'entraînement est couplé au dispositif d'aiguillage (110) par l'intermédiaire d'un bras de levier (112) en prise avec un arbre du dispositif d'aiguillage (110) s'étendant dans la direction de l'axe de pivotement (113).

7. Conteneur selon la revendication 5 ou 6, **caractérisé en ce que** le dispositif d'entraînement présente un ensemble piston/cylindre (120) pneumatique.

8. Conteneur selon l'une des revendications 5 à 7, **caractérisé en ce que** le dispositif d'entraînement présente un vérin de traction (125a, 125b) qui se rétracte sous l'effet de la pression.

9. Conteneur selon les revendications 6 et 8, **caractérisé en ce que** le bras de levier (112) est constitué par deux bras ; un premier vérin de traction (125a) situé entre un bras (112a) du bras de levier (112) et un point de fixation (126a) situé du côté du conteneur, et un second vérin de traction (125b) situé entre l'autre bras (112b) du bras de levier (112) et un point de fixation (126b) situé du côté du conteneur étant maintenus de telle manière qu'une pression exercée sur le premier vérin de traction (125a) produit un couple par rapport à l'axe de pivotement (113) dans une première direction, et une pression exercée sur le second vérin de traction (125b) produit un couple dans une seconde direction opposée à la première direction.

10. Conteneur selon l'une des revendications 6 à 9, **caractérisé en ce que** le bras de levier (112) présente plusieurs zones de fixation (112c) destinées au couplage d'un dispositif d'entraînement.

11. Conteneur selon l'une des revendications 7 à 10, **caractérisé en ce que** l'ensemble piston/cylindre (120) / le vérin de traction (125a, 125b) est monté rotatif au niveau de son point de fixation (126, 126a, 126b) situé du côté du conteneur autour d'un axe (127, 127a, 127b) dont le prolongement est notamment parallèle à l'axe de pivotement (113).
